# EUROPÄISCHE PATENTSCHRIFT

(11) **EP 4 106 988 B1**
(45) Veröffentlichungstag und Bekanntmachung des Hinweises auf die Patenterteilung: **22.11.2023**
(21) Anmeldenummer: 21713566.4
(22) Anmeldetag: 15.02.2021
(51) Int. Cl.: B30B 15/02, B30B 11/00, B22F 5/00, B33Y 80/00

(54) **PRESSWERKZEUG UND VERFAHREN ZUR HERSTELLUNG EINES KUGELIGEN GRÜNLINGS**
PRESSING TOOL AND METHOD FOR PRODUCING A SPHERICAL GREEN BODY
OUTIL DE PRESSAGE ET PROCÉDÉ DE FABRICATION D'UN COMPACT CRU SPHÉRIQUE

(30) Priorität: 20.02.2020 DE 102020104440
(43) Veröffentlichungstag der Anmeldung: 28.12.2022
(73) Patentinhaber: Schaeffler Technologies AG & Co. KG, 91074 Herzogenaurach (DE)
(72) Erfinder: BALLMES, Heiko, 91083 Baiersdorf (DE); ARNET, Horst, 91207 Lauf a.d. Pegnitz (DE)
(86) Internationale Anmeldenummer: PCT/DE2021/100148
(87) Internationale Veröffentlichungsnummer: WO 2021/164824

(56) Entgegenhaltungen:
- CN-U- 201 721 056
- US-A- 2 505 430
- US-A- 3 656 946

## Beschreibung

Die vorliegende Erfindung betrifft ein Presswerkzeug zur Herstellung eines kugeligen Grünlings durch Weiterverarbeitung eines vorkompaktierten kugeligen Presslings. Ferner betrifft die Erfindung ein Verfahren zur Herstellung eines kugeligen Grünlings unter Verwendung des erfindungsgemäßen Presswerkzeugs. Mit Vorteil betrifft die Erfindung ein Werkzeug sowie ein Verfahren zur Herstellung eines kugeligen Grünlings aus Keramikmaterial oder aus einer Keramikmaterial enthaltenden Zubereitung. Der herzustellende kugelige Grünling ist bevorzugt ein Wälzkörpergrünling für ein sogenanntes Hybridwälzlager, besonders bevorzugt ein kugeliger Grünling zur Herstellung eines kugelförmigen Wälzkörpers.

Für die nächsten Jahre zeichnet sich im Bereich der keramischen oder teilweise aus Keramik gebildeten Wälzlager ein deutlich steigender Bedarf für unterschiedlichste Anwendungen ab. Vor allem im Bereich der teilweise aus Keramik gebildeten Wälzlager, der sogenannten Hybridlager, zeichnet sich die für Ausführungsformen ab, bei welchen lediglich die Wälzkörper aus Keramik gefertigt sind. Den limitierenden Faktor für einen flächendeckenden Einsatz, vor allem auch in Automotive-Anwendungen, stellen aktuell die Kosten für derartige keramische Wälzkörper dar. Diese Kosten ergeben sich hauptsächlich durch die sehr aufwendige Prozessroute zur Herstellung der Rohlinge sowie durch die Fertigbearbeitung derselben.

Entscheidend für eine optimale Fertigbearbeitung der Wälzkörper ist ein möglichst homogener Rohling, der sich vor allem durch gleichmäßige Eigenschaften und eine hohe Formgenauigkeit bzw. Rundheit auszeichnet. Diese Eigenschaften werden maßgeblich durch die Wahl der Formgebungsverfahren beeinflusst. Aus diesem Grund wird üblicherweise eine zweistufige Formgebung gewählt. Im ersten Schritt wird ein Keramikgranulat mittels uniaxialem oder biaxialem Pressen zu einem vorkompaktierten Pressling verarbeitet. Dieser weist jedoch noch Dichte-Inhomogenitäten auf, welche in einem späteren Sinterschritt zu einem ungleichmäßigem Schwindungsverhalten führen würden. Aus diesem Grund wird in einem zweiten Formgebungsschritt der bereits vorkompaktierte Pressling durch kaltisostatisches Pressen allseitig verdichtet. Dadurch lassen sich die zuvor genannten Dichteunterschiede vergleichmäßigen.

Verfahren zur Herstellung von Grünlingen sind unter anderem bereits bekannt aus den Offenlegungsschriften: CN 103951437 A, CN 103387394 A, CN 101613202 A und der KR 20020032210 A.

Die CN 201 721 056 U beschreibt ein Presswerkzeug zur Herstellung eines kugeligen Grünlings nach dem Oberbegriff des Anspruchs 1, umfassend einen Niederdrückzylinder, einen oberen und einen unteren Formkopf, einen oberen und einen unteren Formfreigabekern, einen Arbeitstisch, einen Ausstoßzylinder und eine Formhülse. Das Pressgut wird mit einem bestimmten Verdichtungsverhältnis in den Formzylinder eingefüllt und der obere Formkopf durch den Niederdrückzylinder heruntergedrückt, bis der gewünschte Pressdruck erreicht und der kugelige Grünling gebildet ist.

Der Erfindung liegt die Aufgabe zugrunde, ein Presswerkzeug sowie ein Verfahren zur Herstellung eines, insbesondere aus Keramikmaterial oder aus einer Keramikmaterial enthaltenden Zubereitung herzustellenden, kugeligen Grünlings bereitzustellen, welches mit Blick auf die Herstellungsdauer zur Herstellung eines kugeligen Grünlings weiter verbessert ist. Mit Vorteil soll auch die Qualität des hergestellten kugeligen Grünlings im Hinblick auf Maßhaltigkeit und Oberflächenbeschaffenheit derart verbessert werden, dass das Ausmaß an erforderlichen Nachbearbeitungen reduziert wird.

Diese Aufgabe wird gelöst durch ein Presswerkzeug zur Herstellung eines kugeligen Grünlings durch Weiterverarbeitung eines vorkompaktierten kugeligen Presslings mit den Merkmalen des Patentanspruchs 1 sowie durch ein Verfahren zur Herstellung eines Grünlings mit den Merkmalen des Patentanspruchs 10.

Das erfindungsgemäße Presswerkzeug umfasst zumindest einen metallischen ersten Presswerkzeugblock und einen metallischen zweiten Presswerkzeugblock, wobei jeder der Presswerkzeugblöcke eine formgebende Ausnehmung aufweist, wobei die Ausnehmungen zusammen eine kugelförmige Kavität zur Aufnahme des vorkompaktierten kugeligen Presslings ausbilden. Jeder Presswerkzeugblock weist um den Bereich seiner Ausnehmung herum einen ersten Werkzeugbereich und um den ersten Werkzeugbereich herum nach außen einen zweiten Werkzeugbereich auf, wobei der erste Werkzeugbereich gegenüber dem zweiten Werkzeugbereich eine höhere Elastizität aufweist, derart, dass in dem ersten Werkzeugbereich angeordnete, mittels eines Fluids unter Druck setzbare Hohlräume eine Ausdehnung des metallischen Werkstoffs unter Vergrößerung eines Querschnitts der Hohlräume im ersten Werkzeugbereich zulassen, so dass die kugelförmige Kavität des Presswerkzeugs, vorzugsweise sphärisch, verkleinerbar ist, derart, dass ein allseitiger Druck auf den vorkompaktierten kugeligen Pressling ausübbar ist. Eine aufwendige vorhergehende Kapselung des vorkompaktierten kugeligen Presslings, bevor dieser in einem zweiten Verfahrensschritt weiter verpresst wird (etwa mittels eines kaltisostatischen Pressvorgangs), ist aufgrund der Verwendung des erfindungsgemäßen Presswerkzeugs nicht mehr erforderlich. Ferner ist ein kugeliger Grünling herstellbar, der in seiner Oberflächenbeschaffenheit nur noch wenig Nacharbeit erforderlich macht.

Gemäß einer vorteilhaften Ausgestaltung der Erfindung kann vorgesehen sein, dass das Presswerkzeug durch ein additives Fertigungsverfahren hergestellt ist. Durch ein in einem sogenannten 3D-Druck hergestelltes Presswerkzeug können nahezu beliebige Freiformen und Kanäle in das Presswerkzeug eingebracht werden - insbesondere auch Hohlräume, deren Querschnittskontur von einer geradlinigen Erstreckung (wie sie etwa durch in ein Werkzeug oder Werkstück eingebrachte Bohrungen oder Bohrkanäle entstehen) abweichen. Die sogenannte "Additive Fertigung" bezeichnet einen Prozess, bei dem auf der Basis von digitalen 3D-Konstruktionsdaten durch das Aufbringen von Material schichtweise ein Bauteil aufgebaut wird. Additive Fertigung beschreibt jedoch besser als die Bezeichnung 3D-Druck, dass es sich hier um ein professionelles Produktionsverfahren handelt, das sich deutlich von konventionellen, abtragenden spanenden Fertigungsmethoden unterscheidet. Die Additive Fertigung baut Bauteile Schicht für Schicht aus Werkstoffen oder Werkstoffgemischen auf, die beispielsweise als feines Pulver vorliegen. Als Materialien sind generell unterschiedliche Materialien wie Metalle, Kunststoffe, Keramiken oder Verbundwerkstoffe verwendbar. Im Rahmen der Fertigung kann beispielsweise zunächst eine dünne Schicht des Pulverwerkstoffs auf die Bauplattform aufgetragen werden. Ein starker Laserstrahl schmilzt das Pulver exakt an den Stellen auf, die durch die computergenerierten Bauteil-Konstruktionsdaten vorgeben sind. Danach erfolgt ein weiterer Pulverauftrag. Der Werkstoff wird erneut aufgeschmolzen und verbindet sich an den definierten Stellen mit der darunterliegenden Schicht. Die Bauteile können je nach Ausgangsstoff und Anwendung mit Stereolithografie, Laser-Sintern, Laserschmelzen, Fused Deposition Modeling oder Polyjet-Modeling gefertigt werden. Die additiv gefertigten metallischen Presswerkzeugblöcke werden zu dem erfindungsgemäße Presswerkzeug zusammengesetzt.

Dabei sind bevorzugt zwei Presswerkzeugblöcke vorhanden, es können aber auch mehr als zwei Presswerkzeugblöcke vorhanden sein, die zusammen die kugelförmige Kavität ausbilden. Bevorzugt ist dabei eine gerade Anzahl von Presswerkzeugblöcken.

Gemäß einer weiteren, besonders bevorzugten Ausführungsform der Erfindung kann es vorgesehen sein, dass das Presswerkzeug insgesamt aus Metall gebildet ist, wodurch ein geringer Werkzeugverschleiß erreicht wird und wodurch nahezu keine Verunreinigungen des Grünlings ausgehend vom Werkzeug mehr erfolgen können. Dabei können verschiedene Stähle verwendet werden, um einen Presswerkzeugblock additiv auszubilden. Aber auch die Verwendung anderer Metalle und eine Kombination unterschiedlicher Metalle ist aus Basis der additiven Fertigung generell möglich.

In einer ebenfalls bevorzugten Ausgestaltungsvariante der Erfindung sind der erste Werkzeugbereich und der zweite Werkzeugbereich zumindest eines Presswerkzeugblocks aus unterschiedlichen metallischen Werkstoffen gebildet, wodurch die Oberflächenqualität des herzustellenden Grünlings weiter optimiert werden kann.

Auch kann es vorteilhaft sein, die Erfindung dahingehend weiterzuentwickeln, dass der erste Werkzeugbereich und der zweite Werkzeugbereich zumindest eines Presswerkzeugblocks aus gleichen metallischen Werkstoffen gebildet sind, wodurch eine vereinfachte Herstellung des Werkzeugs gewährleistet ist.

Insbesondere ist jeder Presswerkzeugblock aus Stahl und/oder Hartmetall gebildet.

Gemäß einer weiteren zu bevorzugenden Ausgestaltung des Erfindungsgegenstandes kann vorgesehen sein, dass die höhere Elastizität des ersten Werkzeugbereichs dadurch erreicht wird, dass der Werkstoff im ersten Werkzeugbereich teilweise in seiner Struktur aufgelöst ist, insbesondere die Struktur des Werkstoffs im ersten Werkzeugbereich, im Vergleich zur Struktur des zweiten Werkzeugbereichs, um mindestens 20% und maximal 50% aufgelöst ist. Unter Strukturauflösung wird im Sinne der Erfindung verstanden, dass aufgelöste Bereiche nicht mehr vorhanden sind - weil beispielsweise kleinste Hohlräume in Form von Poren - wie bei einem Schwamm - erzeugt sind oder dass Gitterstrukturen mit dazwischenliegenden Freiräumen geschaffen sind. Die im ersten Werkzeugbereich mittels einer definierten Porosität und/oder Freiraumanordnung erzeugte Elastizität des zur Bildung des Presswerkzeugblocks verwendeten Werkstoffs ermöglicht es, die Oberfläche der Ausnehmung bei einem Aufbringen von Druck im Bereich der mit Fluid beaufschlagten Hohlräume auf den, in die Ausnehmung eingesetzten kugeligen Pressling allseitig zu zubewegen. Hierdurch kann erreicht werden, dass je nach Anwendung und Material bzw. je nach herzustellendem kugeligen Grünling eine bestmögliche Elastizität des ersten Werkzeugbereichs bzw. eine bestmögliche Steifigkeit der beiden Werkzeugbereiche zueinander eingestellt werden kann.

In einer ebenfalls bevorzugten Ausgestaltungsvariante der Erfindung kann auch vorgesehen sein, dass die formgebende Ausnehmung des ersten Presswerkzeugblocks und die formgebende Ausnehmung des zweiten Presswerkzeugblocks in Form einer Halbkugel ausgebildet sind, wodurch herstellungstechnisch vereinfacht kugelförmige Wälzkörper, insbesondere Keramikwälzkörper für sogenannte Hybridwälzlager, in hoher Oberflächenqualität herstellbar sind. Die kugelförmige Kavität ist durch Anlegen von Hydraulikdruck an den Hohlräumen vorzugsweise sphärisch verkleinerbar, wobei insbesondere im Bereich der Kontaktflächen zwischen den vorhandenen Presswerkzeugblöcken Abweichungen möglich sind, d.h. die Volumenverkleinerung der Kavität konstruktionsbedingt geringer ausfallen kann.

Vorzugsweise weist jeder Presswerkzeugblock jeweils eine Vielzahl von mit Hydraulikfluid versorgbaren Hohlräumen im ersten Werkzeugbereich auf. Insbesondere ist zumindest einer der Hohlräume, bevorzugt eine Mehrzahl oder alle Hohlräume der Vielzahl von Hohlräumen ringförmig die Ausnehmung umgebend und einen, vorzugsweise ovalen, Querschnitt aufweisend ausgebildet. Diese ringförmigen Hohlräume werden mit Vorteil gleichmäßig verteilt um die Ausnehmung im Presswerkzeugblock herum ausgebildet. Dabei wird die flache Seite des Ovals parallel zur benachbarten Oberfläche der Ausnehmung im Presswerkzeug ausgerichtet. Hierdurch wird eine optimale Anpassung der Oberfläche der Ausnehmung im Presswerkzeugs an die gewünschte optimale Kontur des späteren kugeligen Presslings gewährleistet und somit ein hoher Grad an Formgenauigkeit des herzustellenden kugeligen Grünlings gewährleistet.

In Ergänzung oder alternativ zu ringförmig ausgebildeten Hohlräumen haben sich auch linsenförmig ausgebildete Hohlräume bewährt, die mit Fluid unter Druck gesetzt werden können. Dabei wird die flache Seite der Linsenform parallel zur benachbarten Oberfläche der Ausnehmung im Presswerkzeug ausgerichtet.

Gemäß einer weiteren bevorzugten Ausgestaltung des Erfindungsgegenstandes kann vorgesehen sein, dass zumindest einige der Hohlräume jeweils über Fluidkanäle hydraulisch miteinander wirkverbunden sind, wodurch ebenfalls die gewünschte optimale Kontur der Kavität des Presswerkzeugs im Kontaktbereich mit dem vorkompaktierten Pressling weiter verbessert wird.

Darüber hinaus wird die der Erfindung zugrunde liegende Aufgabe durch ein Verfahren zur Herstellung eines kugeligen Grünlings unter Verwendung des vorstehend beschriebenen Presswerkzeugs gelöst. Das erfindungsgemäße Verfahren zur Herstellung eines kugeligen Grünlings, insbesondere aus Keramikmaterial oder einer Keramikmaterial enthaltenden Zubereitung, umfasst einen ersten Verfahrensschritt, in welchem eine erste Formgebung erfolgt, durch Pressen eines Pulvers, insbesondere aus dem Keramikmaterial oder der Zubereitung, zu einem vorkompaktierten kugeligen Pressling. In einem zweiten Verfahrensschritt erfolgt eine weitere Formgebung, indem der vorkompaktierte kugelige Pressling mittels des zwei- oder mehrteiligen Presswerkzeugs, in dessen kugelförmige Kavität er eingebracht wird, zum kugeligen Grünling nachverdichtet wird. Dabei wird der Druck auf den vorkompaktierten kugeligen Pressling durch das Anlegen eines hydraulischen Innendrucks im Presswerkzeug erzeugt, wodurch die kugelförmige Kavität des Presswerkzeugs, vorzugsweise sphärisch, verkleinert wird, derart, dass ein allseitiger Druck auf den vorkompaktierten kugeligen Pressling ausgeübt wird.

Schließlich wird die Aufgabe der Erfindung durch die Verwendung eines erfindungsgemäßen Presswerkzeugs zur Herstellung eines kugeligen Grünlings unter Weiterverarbeitung eines, aus einem aus Keramikmaterial oder einer Keramikmaterial enthaltenden Zubereitung bestehenden, vorkompaktierten kugeligen Presslings gelöst.

Nachfolgend wird die Erfindung anhand von Figuren ohne Beschränkung des allgemeinen Erfindungsgedankens beispielhaft erläutert werden.

Es zeigen:
- Figur 1: ein erfindungsgemäßes Presswerkzeug in einer möglichen Ausführungsform in einer schematischen Querschnittsansicht mit Schnitt in vertikaler Ebene, und
- Figur 2: das Presswerkzeug gemäß Figur 1 in geschlossenem Zustand mit eingelegtem vorkompaktierten kugeligen Pressling, der zu einem kugeligen Grünling weiter verpresst werden soll.

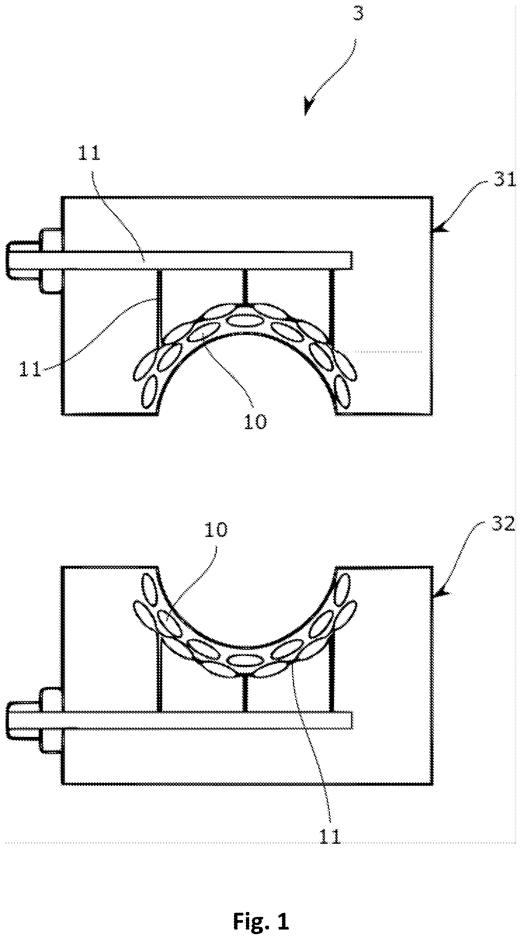

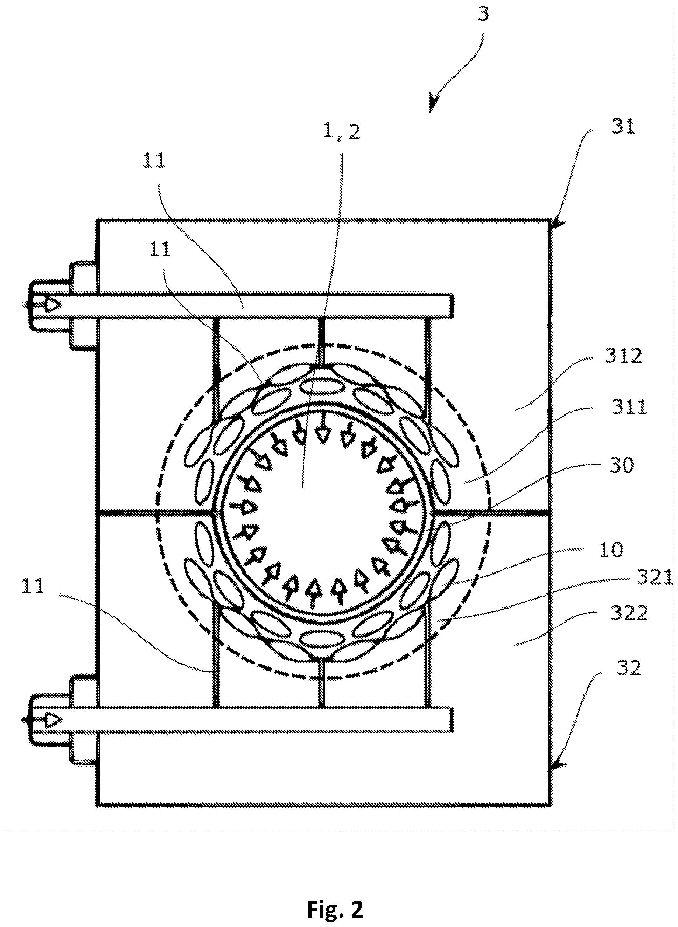

Figur 1 und Figur 2 zeigen das Presswerkzeug 3 in einer möglichen Ausführungsform in einer schematischen Querschnittsansicht mit einem Schnitt in vertikaler Ebene durch die Mitte des Presswerkzeugs 3, wobei in Figur 2 das Presswerkzeug 3 in einem geschlossenen Zustand mit eingelegtem vorkompaktierten kugeligen Pressling dargestellt ist.

Die Figuren 1 und 2 zeigen zum einen ein Presswerkzeug 3 in seinem grundsätzlichen Aufbau in schematischer Darstellung. Das dargestellte Presswerkzeug 3 zur Herstellung eines kugeligen Grünlings 1 durch Weiterverarbeitung eines vorkompaktierten kugeligen Presslings 2 ist hier zweiteilig ausgebildet und umfasst einen ersten oberen Presswerkzeugblock 31 und einen zweiten unteren Presswerkzeugblock 32, wobei jeder der Presswerkzeugblöcke 31; 32 im Bereich der sich gegenüberliegenden Werkzeugflächen eine formgebende Ausnehmung aufweist. Die beiden einander gegenüberliegend angeordneten Ausnehmungen bilden gemeinsam eine kugelförmige Kavität 30 zur Aufnahme des vorkompaktierten kugeligen Presslings 2 aus. Jeder Presswerkzeugblock 31; 32 weist um den Bereich seiner Ausnehmung herum einen ersten Werkzeugbereich 311; 321 und um den ersten Werkzeugbereich 311; 321 herum nach außen einen zweiten Werkzeugbereich 312; 322 auf, wobei der erste Werkzeugbereich 311; 321 gegenüber dem zweiten Werkzeugbereich 312; 322 eine höhere Elastizität aufweist. Diese erhöhte Elastizität wird mit Vorteil dadurch erreicht, dass das metallische Material bzw. der metallische Werkstoff im ersten Werkzeugbereich 311; 321 teilweise in seiner Struktur aufgelöst ist. Mit Vorteil beträgt die Strukturauflösung im Vergleich zur Struktur des zweiten Werkzeugbereichs 312; 322 mindestens 20% und maximal 50%. Die Strukturauflösung wird zum Beispiel durch die Bildung kleinerer Hohlräume, wie sie beispielsweise in Strukturen von Schwämmen ausgebildet sind, erreicht. Aufgrund der unterschiedlichen Elastizität der beiden Werkzeugbereiche 311, 321; 312, 322 kann durch in dem ersten Werkzeugbereich 311; 321 angeordnete und mittels eines Fluids unter Druck setzbare Hohlräume 10 eine Ausdehnung des metallischen Werkstoffs unter Vergrößerung eines Querschnitts der Hohlräume 10 im ersten Werkzeugbereich 311; 321 erreicht werden, so dass die kugelförmige Kavität 30 des Presswerkzeugs 3 sphärisch verkleinerbar ist, derart, dass ein allseitiger Druck auf den vorkompaktierten kugeligen Pressling 2 ausübbar ist.

Jeder Presswerkzeugblock 31; 32 weist jeweils eine Vielzahl von Hohlräumen 10 auf. Diese Hohlräume 10 sind hier ringförmig um eine Ausnehmung ausgebildet, wobei im Querschnitt gesehen die Umfangslinie eines Hohlraums 10 oval ausgebildet ist. Die flache Seite des Ovals ist der Ausnehmung zugewandt angeordnet. Im dargestellten Ausführungsbeispiel weisen die Hohlräume 10 im Querschnitt gesehen also eine Elipsenform auf. Einige oder alle der Hohlräume 10 sind über Fluidkanäle 11 hydraulisch miteinander wirkverbunden, wobei im gezeigten Beispiel im Querschnitt gesehen in jedem Presswerkzeugblock 31; 32 ein horizontaler (als Versorgungskanal ausgebildeter) Fluidkanal 11 größeren Querschnitts ausgebildet ist, der eine Mehrzahl von radial nach innen verlaufenden kleineren (als Zuführkanal ausgebildeten) Fluidkanälen 11 mittleren Querschnitts versorgt, die wiederum die um die Ausnehmung im Presswerkzeug 3 herum angeordneten Hohlräume 10 mit Fluid versorgen, so dass ein entsprechender Hydraulikdruck im Presswerkzeug 3 aufgebaut werden kann. Die einzelnen Hohlräume 10 sind dabei gegebenenfalls über (als Verbinderkanäle ausgebildete) Fluidkanäle 11 mit kleinerem Querschnitt hydraulisch untereinander verbunden. Durch den Hydraulikdruck und die Elastizität des ersten Werkzeugbereichs 311; 321 in Verbindung mit der Steifigkeit des zweiten Werkzeugbereichs 312; 321 kann nunmehr die durch die Ausnehmungen im Presswerkzeug 3 gebildete kugelförmige Kavität 30 des Presswerkzeugs 3 verkleinert und entsprechender Pressdruck auf den kugeligen Pressling 2 ausgeübt werden.

Zum anderen veranschaulichen die Figuren 1 und 2 ein erfindungsgemäßes Verfahren zur Herstellung eines Grünlings 1 in einem zweistufigen Herstellungsprozess, wobei hier nur der auf den ersten aus dem Stand der Technik bekannten Verfahrensschritt für eine erste Formgebung aufbauende zweite Verfahrensschritt veranschaulicht ist. Gemäß dem zweiten Verfahrensschritt erfolgt eine weitere Formgebung, indem der im ersten Schritt vorkompaktierte kugelige Pressling 2 mittels des zwei- oder mehrteilig ausgebildeten Presswerkzeugs 3, in dessen kugelförmige Kavität 30 er eingebracht wird, zum kugeligen Grünling 1 weiter verpresst wird. Dabei wird der Druck auf den vorkompaktierten kugeligen Pressling 2 durch das Anlegen eines hydraulischen Innendrucks im Presswerkzeug 3 erzeugt, wodurch die kugelförmige Kavität 30 des Presswerkzeugs 3 sphärisch verkleinert wird, derart, dass ein allseitiger Druck auf den vorkompaktierten kugeligen Pressling 2 ausgeübt wird. Das dargestellte Presswerkzeug 3 ist geeignet, um kugelige Grünlinge 1 auszubilden, die nach einem Entbindern und Sintern, unmittelbar oder nach einer geringfügigen Hartbearbeitung, zu Wälzlagerkugeln überführt werden. Derartige kugelige Grünlinge 1 werden in einem Sinterschritt gesintert und verfestigt. Keramische Wälzlagerkugeln sind für Hybridwälzlager zusammen mit metallischen Lagerringen einsetzbar.

Die Erfindung ist nicht auf die in den Figuren dargestellten Ausführungsformen und Anwendungsbereiche beschränkt. Die vorstehende Beschreibung ist daher nicht als beschränkend, sondern als erläuternd anzusehen. Die nachfolgenden Patentansprüche sind so zu verstehen, dass ein genanntes Merkmal in zumindest einer Ausführungsform der Erfindung vorhanden ist. Dies schließt die Anwesenheit weiterer Merkmale nicht aus. Sofern die Patentansprüche und die vorstehende Beschreibung 'erste' und 'zweite' Merkmal definieren, so dient diese Bezeichnung der Unterscheidung zweier gleichartiger Merkmale, ohne eine Rangfolge festzulegen.

### Bezugszeichenliste

1 Grünling
2 Pressling
3 Presswerkzeug
10 Hohlraum (ausgebildet im Werkstoff des Presswerkzeugs)
11 Fluidkanal
30 Kavität (des Presswerkzeugs gebildet durch Ausnehmung für Pressling im Presswerkzeug)
31 erster Presswerkzeugblock
32 zweiter Presswerkzeugblock
311 erster Werkzeugbereich (des ersten Presswerkzeugblocks)
312 zweiter Werkzeugbereich (des ersten Presswerkzeugblocks)
321 erster Werkzeugbereich (des zweiten Presswerkzeugblocks)
322 zweiter Werkzeugbereich (des zweiten Presswerkzeugblocks)

## Patentansprüche

1. Presswerkzeug (3) zur Herstellung eines kugeligen Grünlings (1) durch Weiterverarbeitung eines vorkompaktierten kugeligen Presslings (2), wobei
- das Presswerkzeug (3) zumindest einen metallischen ersten Presswerkzeugblock (31) und einen metallischen zweiten Presswerkzeugblock (32) aufweist und jeder der Presswerkzeugblöcke (31; 32) eine formgebende Ausnehmung aufweist, wobei die Ausnehmungen zusammen eine kugelförmige Kavität (30) zur Aufnahme des vorkompaktierten kugeligen Presslings (2) ausbilden,
- wobei jeder Presswerkzeugblock (31; 32) um den Bereich seiner Ausnehmung herum einen ersten Werkzeugbereich (311; 321) und um den ersten Werkzeugbereich (311; 321) herum nach außen einen zweiten Werkzeugbereich (312; 322) aufweist, **dadurch gekennzeichnet, dass** der erste Werkzeugbereich (311; 321) gegenüber dem zweiten Werkzeugbereich (312; 322) eine höhere Elastizität aufweist, derart, dass in dem ersten Werkzeugbereich (311; 321) angeordnete, mittels eines Fluids unter Druck setzbare Hohlräume (10) eine Ausdehnung des metallischen Werkstoffs unter Vergrößerung eines Querschnitts der Hohlräume (10) im ersten Werkzeugbereich (311; 321) zulassen, so dass die kugelförmige Kavität (30) des Presswerkzeugs (3) verkleinerbar ist, derart, dass ein allseitiger Druck auf den vorkompaktierten kugeligen Pressling (2) ausübbar ist.

2. Presswerkzeug nach Anspruch 1,
**dadurch gekennzeichnet, dass**
das Presswerkzeug (3) durch ein additives Fertigungsverfahren hergestellt ist.

3. Presswerkzeug (3) nach einem der vorstehenden Ansprüche,
**dadurch gekennzeichnet, dass**
das Presswerkzeug (3) insgesamt aus Metall gebildet ist.

4. Presswerkzeug (3) nach einem der vorstehenden Ansprüche,
**dadurch gekennzeichnet, dass**
der erste Werkzeugbereich (311; 321) und der zweite Werkzeugbereich (312; 322) zumindest eines Presswerkzeugblocks (31, 32) aus gleichen metallischen Werkstoffen gebildet sind.

5. Presswerkzeug (3) nach einem der vorstehenden Ansprüche,
**dadurch gekennzeichnet, dass**
der erste Werkzeugbereich (311; 321) und der zweite Werkzeugbereich (312; 322) zumindest eines Presswerkzeugblocks (31, 32) aus unterschiedlichen metallischen Werkstoffen gebildet sind.

6. Presswerkzeug (3) nach einem der vorstehenden Ansprüche,
**dadurch gekennzeichnet, dass**
die höhere Elastizität des ersten Werkzeugbereichs (311; 321) dadurch erreicht wird, dass der metallische Werkstoff im ersten Werkzeugbereich (311; 321) teilweise in seiner Struktur aufgelöst ist, insbesondere die Strukturauflösung im Vergleich zur Struktur des zweiten Werkzeugbereichs (312; 322) mindestens 20% und maximal 50% beträgt.

7. Presswerkzeug (3) nach einem der vorstehenden Ansprüche,
**dadurch gekennzeichnet, dass**
die formgebende Ausnehmung des ersten Presswerkzeugblocks (31) und die formgebende Ausnehmung des zweiten Presswerkzeugblocks (32) in Form einer Halbkugel ausgebildet sind.

8. Presswerkzeug (3) nach einem der vorstehenden Ansprüche,
**dadurch gekennzeichnet, dass**
jeder Presswerkzeugblock (31; 32) jeweils eine Vielzahl von Hohlräumen (10) aufweist, und insbesondere zumindest einer der Hohlräume (10) ringförmig die Ausnehmung umgibt und einen ovalen Querschnitt aufweist.

9. Presswerkzeug (3) nach einem der vorstehenden Ansprüche,
**dadurch gekennzeichnet, dass**
zumindest einige der Hohlräume (10) jeweils über Fluidkanäle (11) hydraulisch miteinander wirkverbunden sind.

10. Verfahren zur Herstellung eines Grünlings (1), insbesondere aus Keramikmaterial oder einer Keramikmaterial enthaltenden Zubereitung, unter Verwendung eines Presswerkzeugs gemäß einem der vorstehenden Ansprüche,
- wobei in einem ersten Verfahrensschritt eine erste Formgebung erfolgt, durch Pressen eines Pulvers, insbesondere aus dem Keramikmaterial oder der Zubereitung, unter Bildung des vorkompaktierten Presslings (2),
wobei in einem zweiten Verfahrensschritt eine weitere Formgebung erfolgt, indem der vorkompaktierte Pressling (2) mittels des zwei- oder mehrteiligen Presswerkzeugs (3), in dessen Kavität (30) er eingebracht wird, zum Grünling (1) nachverdichtet wird, wobei der Druck auf den vorkompaktierten Pressling (2) durch das Anlegen eines hydraulischen Innendrucks im Presswerkzeug (3) erfolgt, wodurch die Kavität (30) des Presswerkzeugs (3) verkleinert wird, derart, dass ein allseitiger Druck auf den vorkompaktierten Pressling (2) ausgeübt wird.

11. Verwendung eines Presswerkzeugs (3) nach einem der vorstehenden Ansprüche 1-9,
zur Herstellung eines Grünlings (1) durch Weiterverarbeitung eines aus einem aus Keramikmaterial oder einer Keramikmaterial enthaltenden Zubereitung bestehenden vorkompaktierten Presslings (2).

## Claims

1. A pressing tool (3) for producing a spherical green body (1) by further processing a precompacted spherical pressing body (2), wherein
- the pressing tool (3) has at least a first metal pressing tool block (31) and a second metal pressing tool block (32) and each of the pressing tool blocks (31; 32) has a shaping recess, wherein the recesses together form a spherical cavity (30) for receiving the precompacted spherical pressing body (2),
- wherein each pressing tool block (31; 32) has a first tool region (311; 321) around the region of its recess and has a second tool region (312; 322) around the first tool region (311; 321), externally thereto, **characterised in that** the first tool region (311; 321) has a higher elasticity than the second tool region (312; 322), such that hollow spaces (10), which are arranged in the first tool region (311; 321) and can be pressurised by means of a fluid, permit an expansion of the metal material with an enlargement of a cross-section of the hollow spaces (10) in the first tool region (311; 321), such that the spherical cavity (30) of the pressing tool (3) can be made smaller such that a pressure can be exerted on all sides of the precompacted spherical pressing body (2).

2. The pressing tool according to claim 1,
**characterised in that**
the pressing tool (3) is produced by an additive production process.

3. The pressing tool (3) according to one of the preceding claims,
**characterised in that**
the pressing tool (3) is made entirely of metal.

4. The pressing tool (3) according to one of the preceding claims,
**characterised in that**
the first tool region (311; 321) and the second tool region (312; 322) of at least one pressing tool block (31, 32) are formed from the same metal materials.

5. The pressing tool (3) according to one of the preceding claims,
**characterised in that**
the first tool region (311; 321) and the second tool region (312; 322) of at least one pressing tool block (31, 32) are formed from different metal materials.

6. The pressing tool (3) according to one of the preceding claims,
**characterised in that**
the higher elasticity of the first tool region (311; 321) is achieved **in that** the metal material in the first tool region (311; 321) is partially dissolved in its structure, in particular the structure dissolution is at least 20% and at most 50% in comparison with the structure of the second tool region (312; 322).

7. The pressing tool (3) according to one of the preceding claims,
**characterised in that**
the shaping recess of the first pressing tool block (31) and the shaping recess of the second pressing tool block (32) are designed in the form of a hemisphere.

8. The pressing tool (3) according to one of the preceding claims,
**characterised in that**
each pressing tool block (31; 32) has a plurality of hollow spaces (10), and in particular at least one of the hollow spaces (10) annularly surrounds the recess and has an oval cross-section.

9. The pressing tool (3) according to one of the preceding claims,
**characterised in that**
at least some of the hollow spaces (10) are each hydraulically interconnected via fluid channels (11).

10. A method for producing a green body (1), in particular from ceramic material or a preparation containing ceramic material, using a pressing tool according to one of the preceding claims,
- wherein, in a first method step, a first shaping takes place by pressing a powder, in particular from the ceramic material or the preparation, forming the precompacted pressing body (2),
wherein
in a second method step, further shaping is carried out by recompressing the precompacted pressing body (2) to form the green body (1) by means of the two-part or multi-part pressing tool (3), into the cavity (30) of which it is inserted, wherein the pressure on the precompacted pressing body (2) is effected by applying hydraulic internal pressure in the pressing tool (3), whereby the cavity (30) of the pressing tool (3) is reduced in size such that pressure is exerted on all sides of the precompacted pressing body (2).

11. A use of a pressing tool (3), according to one of the preceding claims 1-9, for producing a green body (1) by further processing a precompacted pressing body (2) consisting of a ceramic material or a preparation containing ceramic material.

## Revendications

1. Outil de presse (3) pour la fabrication d'un comprimé cru sphérique (1) par traitement ultérieur d'un comprimé sphérique précompacté (2),
- l'outil de presse (3) présentant au moins un premier bloc d'outil de presse métallique (31) et un second bloc d'outil de presse métallique (32) et chacun des blocs d'outils de presse (31 ; 32) présentant un évidement de façonnage, les évidements formant ensemble une cavité sphérique (30) pour recevoir le comprimé sphérique précompacté (2),
- dans lequel chaque bloc d'outil de presse (31 ; 32) présente autour de la zone de son évidement une première zone d'outil (311 ; 321) et autour de la première zone d'outil (311 ; 321) vers l'extérieur une seconde zone d'outil (312 ; 322), **caractérisé en ce que** la première zone d'outil (311 ; 321) présente une élasticité supérieure à celle de la seconde zone d'outil (312 ; 322), de manière à ce que des espaces creux (10) agencés dans la première zone d'outil (311 ; 321) pouvant être mis sous pression au moyen d'un fluide permettent une dilatation du matériau métallique en agrandissant une section transversale des espaces creux (10) dans la première zone d'outil (311 ; 321), de sorte que la cavité sphérique (30) de l'outil de presse (3) soit réduite, de manière à ce qu'une pression puisse être exercée sur tous les côtés du comprimé sphérique précompacté (2).

2. Outil de presse selon la revendication 1,
**caractérisé en ce que**
l'outil de presse (3) est fabriqué selon un procédé de fabrication additive.

3. Outil de presse (3) selon l'une quelconque des revendications précédentes,
**caractérisé en ce que**
l'outil de presse (3) est formé entièrement en métal.

4. Outil de presse (3) selon l'une quelconque des revendications précédentes,
**caractérisé en ce que**
la première zone d'outil (311 ; 321) et la seconde zone d'outil (312 ; 322) d'au moins un bloc d'outil de presse (31, 32) sont formées à partir des mêmes matériaux métalliques.

5. Outil de presse (3) selon l'une quelconque des revendications précédentes,
**caractérisé en ce que**
la première zone d'outil (311 ; 321) et la seconde zone d'outil (312 ; 322) d'au moins un bloc d'outil de presse (31, 32) sont formées à partir de matériaux métalliques différents.

6. Outil de presse (3) selon l'une quelconque des revendications précédentes,
**caractérisé en ce que**
l'élasticité supérieure de la première zone d'outil (311 ; 321) est obtenue **en ce que** le matériau métallique dans la première zone d'outil (311 ; 321) est partiellement dissous dans sa structure, en particulier la dissolution de structure par comparaison avec la structure de la seconde zone d'outil (312 ; 322) étant d'au moins 20 % et au maximum de 50 %.

7. Outil de presse (3) selon l'une quelconque des revendications précédentes,
**caractérisé en ce que**
l'évidement de façonnage du premier bloc d'outil de presse (31) et l'évidement de façonnage du second bloc d'outil de presse (32) sont conçus sous la forme d'un hémisphère.

8. Outil de presse (3) selon l'une quelconque des revendications précédentes,
**caractérisé en ce que**
chaque bloc d'outil de presse (31 ; 32) présente respectivement une pluralité d'espaces creux (10) et en particulier au moins un des espaces creux (10) entoure l'évidement à la manière d'un anneau et présente une section transversale ovale.

9. Outil de presse (3) selon l'une quelconque des revendications précédentes,
**caractérisé en ce qu'**
au moins certains des espaces creux (10) sont chacun reliés de manière fonctionnelle par voie hydraulique les unes aux autres par l'intermédiaire de canaux fluidiques (11).

10. Procédé de fabrication d'un comprimé cru (1), en particulier à partir d'un matériau céramique ou d'une préparation contenant un matériau céramique, au moyen d'un outil de presse selon l'une quelconque des revendications précédentes,
- dans lequel, dans une première étape du procédé, un premier façonnage a lieu par pressage d'une poudre, en particulier issue du matériau céramique ou de la préparation, pour former le comprimé précompacté (2),
dans lequel
dans une seconde étape du procédé, un façonnage ultérieur est effectué, par compression ultérieure du comprimé précompacté (2) en comprimé cru (1) au moyen de l'outil de presse (3) en deux ou plusieurs parties, dans sa cavité (30) où il est inséré, dans lequel la pression sur le comprimé précompacté (2) se produit par application d'une pression interne hydraulique dans l'outil de presse (3), la cavité (30) de l'outil de presse (3) est ainsi réduite, de telle sorte qu'une pression s'exerce sur tous les côtés du comprimé précompacté (2).

11. Utilisation d'un outil de presse (3) selon l'une quelconque des revendications précédentes 1 à 9, pour la fabrication d'un comprimé cru (1) par traitement ultérieur d'un comprimé précompacté (2) constitué d'un matériau céramique ou d'une préparation contenant un matériau céramique.
